# EUROPÄISCHE PATENTANMELDUNG

(11) **EP 1 529 989 A2**
(43) Veröffentlichungstag der Anmeldung: **11.05.2005**
(21) Anmeldenummer: 04025712.3
(22) Anmeldetag: 29.10.2004
(51) Int. Cl.: F16H 61/02

(54) **Getriebesteuervorrichtung mit mehreren änderbaren Getriebefunktionen und entsprechendes Getriebesteuerverfahren**

(30) Priorität: 07.11.2003 DE 10351983
(71) Anmelder: AUDI AG, 85045 Ingolstadt (DE)
(72) Erfinder: Kischkat, Ralf, Dr., 85057 Ingolstadt (DE)
(74) Vertreter: Thielmann, Frank

(57) **Zusammenfassung**

Die Getriebesteuerung soll flexibler gestaltet werden, ohne den Fahrer zu überfordern. Daher wird eine Getriebesteuervorrichtung vorgeschlagen, die eine Eingabeeinrichtung (2) zum Eingeben von Schaltzuständen und eine Steuereinrichtung zum Umsetzen der Signale von den Eingabeeinrichtung in Getriebesteuersignale besitzt, wobei die Eingabeeinrichtung eine Anzeigeeinheit (4) aufweist. Mit der Eingabeeinrichtung (2) können optisch unterstützt durch die Anzeigeeinheit (4) mehrere Getriebesteuerfunktionen (31 bis 34) aufgerufen und/oder parametriert werden. Somit sind in der Getriebesteuereinrichtung beispielsweise unterschiedliche Versionen an Steuerprogrammen oder nachträglich eingespeiste Steuerprogramme einschaltbar.

## Beschreibung

Die vorliegende Erfindung betrifft eine Getriebesteuervorrichtung mit einer Eingabeeinrichtung zum Eingeben von Schaltzuständen, wobei die Eingabeeinrichtung eine Anzeigeeinheit aufweist, und einer Steuereinrichtung zum Umsetzen der Signale von der Eingabeeinrichtung in Getriebesteuersignale. Darüber hinaus betrifft die vorliegende Erfindung ein entsprechendes Verfahren zum Steuern eines Getriebes.

Heutige Automatikgetriebe besitzen üblicherweise Wählhebel zur Wahl der Getriebepositionen. Die gängigen Wählhebelstellungen sind "P", "R", "N" und "D". Darüber hinaus sind abhängig vom Typ des Fahrzeugs oder vom Hersteller zusätzliche Wählhebelstellungen wie beispielsweise "S" für sportliches Fahren oder "M-Gasse" für manuellen Modus mit Tipp-Schaltfunktion mittels des Wählhebels zum Auf- und Abschalten von Gängen. Für den manuellen Modus können aber auch beispielsweise am Lenkrad des Fahrzeugs mit Automatikgetriebe Tasten vorgesehen sein, mit denen der nächsthöhere oder nächstniedrigere Gang eingestellt werden kann, wenn sich der Wählhebel in der "M-Gasse" befindet. Die Anmelderin der vorliegenden Anmeldung bietet für den manuellen Modus beispielsweise eine sogenannte Tippln-Funktion an. Damit kann ein kurzzeitiger Wechsel in den manuellen Schaltmodus eines Automatikgetriebes und ein Wechsel der aktuellen Gangstufe in die nächsthöhere bzw. nächstniedrigere durch Drücken der Paddel oder Tasten am Lenkrad realisiert werden. Nach bestimmten Bedingungen, z. B. Schub, Querbeschleunigung, Zeit etc, wird wieder automatisch in den Automatikmodus der Wählhebelstellung (beispielsweise Position "D" oder "S") umgeschaltet.

Die Tippln-Funktion wird durch eine Tipp-Tronic-Logik realisiert. Bei einer älteren Version der Tipp-Tronic-Logik wird bei Beschleunigung des Fahrzeugs, wenn die Drehzahlgrenze des Motors in der aktuellen Übersetzungseinstellung erreicht wird, in den nächsthöheren Gang geschaltet. Nach einer neueren Version dieser Tipp-Tronic-Logik erfolgt dieses automatische Schalten nicht. Um diese neue Logik in das Fahrzeug einbringen zu können, muss der Fahrer eine hierzu geeignete Spezialwerkstatt aufsuchen.

Gewisse Fahrzeuge sind bekanntermaßen auch mit Tastern ausgestattet, mit denen spezielle Fahrprogramme gewählt werden können. Damit ist es für spezielle Situationen, wie beispielsweise Winterbetrieb, möglich, bestimmte Sonderschaltstrategien zu nutzen. So kann z. B. der Fahranteil mit offenem Wandler erhöht und/oder ein Anfahren im zweiten Gang ermöglich werden.

Weiterhin ist es bekannt, Getriebesteuerungen mit Adaptivität auszustatten. Damit ist es möglich, beispielsweise die Schaltstrategie in Abhängigkeit der Sportlichkeit der Fahrweise bzw. des Fahrers zu ändern. So kann bei sportlicher Fahrweise der Motor bei höheren Drehzahlen gehalten werden. Die Erkennung der Sportlichkeit wird über erkannte Fahrer- bzw. Fahrzeugsignale durchgeführt. Indizes für die Sportlichkeit können schnelle Fahrpedalbewegung, häufig stark betätigtes Fahrpedal, schnelle Lenkradbewegung, Querbeschleunigung usw. sein. Diese Adaptivität ist jedoch nicht für alle Fahrer nachvollziehbar und sollte daher abschaltbar sein, so dass beispielsweise eine feste Sportlichkeit eingestellt werden kann.

Die oben beschriebenen Wählhebel zur Wahl der Getriebepositionen und Taster für spezielle Fahrprogramme benötigen jedoch Einbauraum im Kraftfahrzeug. Darüber hinaus ist der Fahrer bereits heute durch eine immer höhere Anzahl von Bedienungs- und Anzeigeelementen überlastet, die für die Vielzahl an zur Verfügung stehenden Funktionen notwendig sind. Wenn also nicht die Anzahl der Bedienungs- und Anzeigeelemente erhöht werden soll, wird seitens der Hersteller vielfach die Anzahl der Funktionen, die vom Fahrer selbst beeinflussbar sind, beschränkt. Dies führt unter Umständen zu einer Unzufriedenheit des Fahrers, da er eine Werkstatt aufsuchen muss, um Funktionen ein- und auszuschalten. Bestimmte Funktionen sind somit für den Fahrer nicht verfügbar, so dass er keine Möglichkeit hat, seine Steuerung im Detail entsprechend seinem Wunsch zu konfigurieren. Würde man dem Fahrer über neue Bedienelemente diese Konfigurationsmöglichkeiten eröffnen, so wäre er in der Regel durch die Vielzahl der Anzeige- und Bedienelemente überfordert.

In diesem Zusammenhang ist aus dem Dokument DE 100 52 881 C2 eine Getriebesteuervorrichtung für ein Kraftfahrzeug bekannt, bei der Optionen oder Parameter zur Beeinflussung des Steuerprogramms für ein stufenloses Getriebe eingestellt werden können. Eine hierzu verwendete Eingabevorrichtung weist eine Anzeige, vorzugsweise die Anzeige eines Bordcomputers oder eines Navigationssystems, auf. Mit der Eingabevorrichtung soll jedoch nur eine Parametrierung eines einzigen Steuerprogramms erfolgen, mit dem ein stufenloses Getriebe angesteuert wird, um einen Stufenautomaten zu simulieren.

Die Aufgabe der vorliegenden Erfindung besteht somit darin, die Funktionalität eines Getriebes durch den Fahrer besser konfigurieren zu können.

Erfindungsgemäß wird diese Aufgabe gelöst durch eine Getriebesteuervorrichtung mit einer Eingabeeinrichtung zum Eingeben von Schaltzuständen, wobei die Eingabeeinrichtung eine Anzeigeeinheit aufweist, und einer Steuereinrichtung zum Umsetzen der Signale von der Eingabeeinrichtung in Getriebesteuersignale, wobei mit der Eingabeeinrichtung optisch unterstützt durch die Anzeigeeinheit mehrere Getriebesteuerfunktionen aufrufbar und/oder parametrierbar sind.

Darüber hinaus ist erfindungsgemäß vorgesehen ein Verfahren zum Steuern eines Getriebes durch Eingeben von Schaltzuständen in eine Eingabevorrichtung in einem Fahrzeug, Umsetzen von Eingabesignalen in Getriebesteuersignale und Umsetzen der Eingabesignale in Anzeigesignale für eine graphische Darstellung, sowie Aufrufen einer von mehreren parametrierbaren Getriebesteuerfunktionen mittels der Eingabeeinrichtung unterstützt durch die graphische Darstellung.

Vorzugsweise besitzt die Eingabeeinrichtung lediglich einen Dreh-Druck-Knopf als einziges Bedienelement. Alternativ kann die Eingabeeinrichtung aber auch einen Touchscreen oder einen Augenbewegungssensor umfassen. Diesen Bedienelementen ist gemeinsam, dass sie ein einfaches Betätigen bzw. Einstellen des Getriebes ermöglichen. Der Fahrer wird somit bei der Getriebeeinstellung weniger vom eigentlichen Fahren abgelenkt.

Die Getriebesteuervorrichtung kann eine Lerneinrichtung aufweisen, mit der das Schaltverhalten eines Fahrers aufgrund seines manuellen Schaltens erlernbar ist. Damit ist es möglich, dass ein Schaltprogramm sehr individuell auf einen Fahrer eingestellt wird.

Die Getriebesteuersignale werden günstigerweise elektrisch an ein Getriebe übertragen. Somit kann auf eine mechanische Verbindung, z. B. mittels Seilzug, verzichtet werden.

In der Getriebesteuervorrichtung, sei es in der Eingabeeinrichtung, der Steuereinrichtung oder einer weiteren Komponente, sind mehrere Getriebesteuerfunktionen gespeichert. Auf diese kann unterstützt durch die Anzeigeeinrichtung auf einfache Art und Weise zugegriffen werden. Dabei kann es vorteilhaft sein, dass eine ältere Version und eine jüngere Version einer gleichen Getriebesteuerfunktion abgespeichert sind. Gleichsam kann es vorteilhaft sein, wenn neben einer individualisierten Getriebesteuerfunktion auch die allgemeine Getriebesteuerfunktion in der Getriebesteuervorrichtung abgespeichert ist. Damit ist es möglich, dass der Fahrer zwischen den einzelnen Versionen hin- und herschaltet, so dass er deren Nutzen bzw. Merkmale besser nachvollziehen kann.

Darüber hinaus können zumindest einige der mehreren Getriebesteuerfunktionen und/oder deren Parameter in Abhängigkeit eines Personalisierungssignals automatisch an eine Person anpassbar seien. Dieses Personalisierungssignal kann von extern in die Getriebesteuervorrichtung eingespeist oder aber manuell in die Eingabeeinrichtung eingegeben werden. Mit Hilfe dieser Personalisierung ist es dann möglich, dass ein Getriebe rasch auf den jeweiligen Fahrer umgestellt wird.

Besonders vorteilhaft ist, wenn zusätzliche Getriebesteuerfunktionen zu den mehreren Getriebesteuerfunktionen nach Inbetriebnahme der Getriebesteuervorrichtung in diese eingespeist werden können. Damit können Softwareneuentwicklungen auch in älteren Getriebesteuerungen genutzt werden.

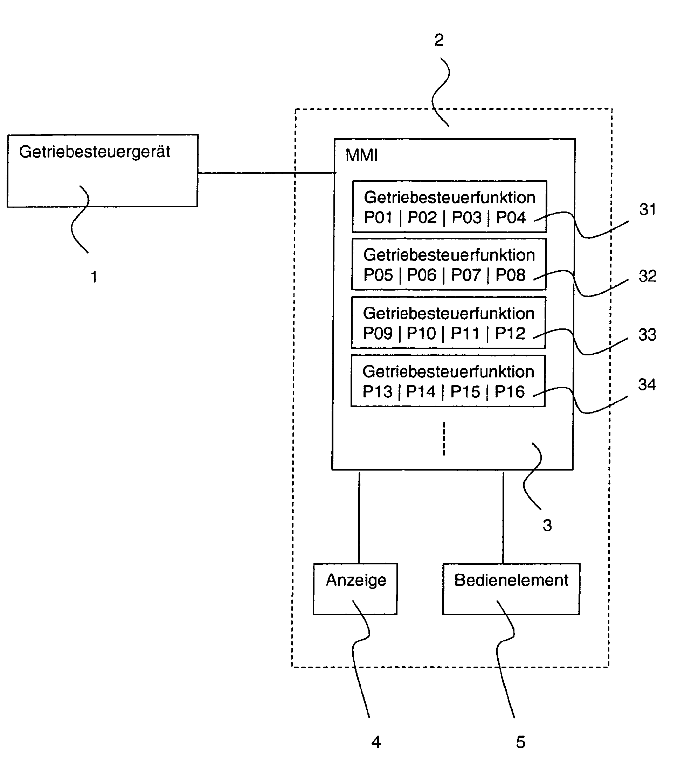

Die vorliegende Erfindung wird nun anhand der beigefügten Zeichnung näher erläutert, die ein Blockschaltbild einer erfindungsgemäßen Getriebesteuervorrichtung zeigt.

Das nachfolgend näher beschriebene Ausführungsbeispiel stellt eine bevorzugte Ausführungsform der vorliegenden Erfindung dar.

Eine Getriebesteuervorrichtung verfügt über ein Getriebesteuergerät 1, das von einer Eingabeeinrichtung 2 angesteuert wird und das seinerseits ein nicht dargestelltes Getriebe eines Kraftfahrzeugs steuert. Die Eingabeeinrichtung besteht aus einer Mensch-Maschine-Schnittstelle MMI 3, einer daran angeschlossenen Anzeige 4 und einem ebenfalls daran angeschlossenen Bedienelement 5.

Die Mensch-Maschine-Schnittstelle (Mensch-Maschine-Interface) 3 stellt für Automatikgetriebe eine neue Art von Eingabe- und Bedienmedium dar. Es erlaubt, viele Anzeige- und Bedienmöglichkeiten auf kleinem Raum übersichtlich bereitzustellen. Eine spezielle Ausführungsform besteht aus einem Anzeigedisplay und einem Dreh-Druck-Knopf mit haptischer (den Tastsinn betreffend!?) Rückmeldung. Weitere Ausführungsformen von Mensch-Maschine-Schnittstellen bzw. Eingabeeinrichtungen sind für den erfindungsgemäßen Gebrauch Touchscreens ebenfalls mit haptischer Rückmeldung, Sprachsteuereinrichtungen mit akustischer Ausgabe über Lautsprecher, Bordcomputer mit Menüsteuerung oder Augenbewegungssensoren, mit deren Hilfe ein Cursor auf einem Bildschirm bewegt werden kann. Somit können die Vorteile eines MMI auch für Automatikgetriebe zugänglich gemacht werden.

Das MMI 3 gibt die eingestellten Funktionen, Werte und Parameter an das Getriebesteuergerät 1 weiter, das diese dann in der Schaltstrategie berücksichtigt. Die Übertragung zum Getriebesteuergerät 1 geschieht beispielsweise über das fahrzeugeigene Bussystem oder eine serielle Schnittstelle. Die Funktionen und Parameter werden in dem MMI 3 gespeichert. Somit können sie dem Fahrer bei Anwahl der Konfigurationsfunktion sofort angezeigt werden und es kann während des Fahrbetriebs auf sie zugegriffen werden. Zusätzlich oder alternativ können die Getriebesteuerfunktionen und Parameter jedoch auch in dem Getriebesteuergerät 1 abgespeichert werden.

Bei einer besonderen Ausführungsform erfolgt die Übertragung der Getriebeposition von der Fahrerwunscherfassung zum Getriebe nicht über einen Seilzug, sondern über ein elektrisches Signal, insbesondere nach der Shiftby-Wire-Technologie. Das MMI 3 kann dabei sowohl zusätzlich zur klassischen Fahrerwunscherkennung als auch zur alleinigen Bedienung für die Getriebepositionswahl eingesetzt werden.

In dem MMI 3 können mehrere Getriebesteuerfunktionen 31, 32, 33, 34, etc. gespeichert werden. Damit können vollkommen unterschiedliche Funktionen des Steuergeräts 1 durch den Fahrer mittels des MMI 3 beeinflusst werden. Beispiele für die Getriebefunktionen sind die eingangs genannte Tipp-Tronic-Logik der Sportlichkeitscharakter, Winterbetriebsfunktion und dergleichen. Die zur Verfügung stehenden Funktionen 31 bis 34 werden auf der Anzeige 4 graphisch dargestellt und mit dem Bedienelement 5 auf einfache Weise ausgewählt. Es müssen also nicht spezielle Taster für die einzelnen Getriebefunktionen zur Verfügung gestellt werden.

Die einzelnen Getriebefunktionen 31 bis 34 können unterschiedlich parametriert werden. So besitzt die Getriebesteuerfunktion 31 symbolhaft die Parameter P01, P02, P03 und P04. Auch diese Parameter können mit Hilfe der Anzeige 4 angewählt und mit dem Bedienelement 5 vom Fahrer geändert werden. Gleiches gilt selbstverständlich für alle weiteren zur Verfügung stehenden Getriebesteuerfunktionen 32, 33 und 34.

Dem Fahrer können damit zusätzliche Konfigurationsmöglichkeiten in der Schaltstrategie zur Verfügung gestellt werden, ohne ihn zu überfordern. Der Grund hierfür liegt unter anderen darin, dass die Zahl der Bedienungs- und Anzeigeelemente mit den Wahlmöglichkeiten nicht ansteigt, sondern sogar reduziert werden kann, was zu erhöhter Übersichtlichkeit führt.

Darüber hinaus können die eingestellten Parameter im Rahmen einer Personalisierung fahrerbezogen nach Erkennung eines bestimmten Fahrers automatisch aktiviert werden. Hierzu ist das MMI 3 mit einem weiteren Eingang (nicht dargestellt) zur automatischen Fahrererkennung zu versehen. Wird der Fahrer nicht erkannt, werden Standardwerte gewählt. Personalisierungsinformationen können aber auch über das Bedienelement 5 eingegeben werden, so dass die personenbezogenen Getriebesteuerfunktionen und deren Parametrierungen automatisch eingestellt werden.

Gemäß der vorliegenden Erfindung sind, wie bereits erwähnt, in dem Getriebesteuergerät 1 oder der Eingabeeinrichtung 2 mehrere Getriebesteuerfunktionen speicherbar. Damit können neu entwickelte Steuerfunktionen nach dem Kauf eines Fahrzeugs in das Getriebesteuergerät eingebracht und aktiviert werden. Diese zusätzlichen Funktionen können dann ebenfalls in der erfindungsgemäßen Art ein- und ausgeschaltet werden. Durch dieses Einund Ausschalten wird dem Fahrer der Nutzen der zusätzlichen Funktion transparenter. Des Weiteren hat der Fahrer dann die Möglichkeit, die jeweilige Funktion nur für eine bestimmte Fahrsituation anzuschalten.

Durch die Anzeige von Getriebefunktionen im MMI als "aktivierbar", wird die Sonderausstattung bzw. der Mehrwert des Fahrzeugs bei Wiederverkauf erkennbar. Einen eventuellen Mehrpreis, den der Vorbesitzer für eine Getriebefunktion bezahlt hat, lässt sich so teilweise beim Wiederverkauf wieder erzielen.

## Patentansprüche

1. Getriebesteuervorrichtung mit
- einer Eingabeeinrichtung (2) zum Eingeben von Schaltzuständen, wobei die Eingabeeinrichtung (2) eine Anzeigeeinheit (4) aufweist, und
- einer Steuereinrichtung (1) zum Umsetzen der Signale von der Eingabeeinrichtung (2) in Getriebesteuersignale,
**dadurch gekennzeichnet, dass**
- mit der Eingabeeinrichtung (2) optisch unterstützt durch die Anzeigeeinheit (4) mehrere Getriebesteuerfunktionen (31 bis 34) aufrufbar und/oder parametrierbar sind.

2. Getriebesteuervorrichtung nach Anspruch 1, wobei die Eingabeeinrichtung (2) als Bedienelement (5) ausschließlich einen Dreh-Druck-Knopf aufweist.

3. Getriebesteuervorrichtung nach Anspruch 1, wobei die Eingabeeinrichtung (2) einen Touchscreen umfasst.

4. Getriebesteuervorrichtung nach Anspruch 1 oder 3, wobei die Eingabeeinrichtung (2) einen Augenbewegungssensor umfasst.

5. Getriebesteuervorrichtung nach einem der vorhergehenden Ansprüche, die eine Lerneinrichtung aufweist, mit der das Schaltverhalten eines Fahrers aufgrund eines manuellen Schaltens erlernbar ist.

6. Getriebesteuervorrichtung nach einem der vorhergehenden Ansprüche, wobei die Getriebesteuersignale elektrisch an ein Getriebe übertragbar sind.

7. Getriebesteuervorrichtung nach einem der vorhergehenden Ansprüche, wobei eine erste Getriebesteuerfunktion der mehreren Getriebesteuerfunktionen (31 bis 34) eine ältere Version und eine zweite Getriebesteuerfunktion der mehreren Getriebesteuerfunktionen (31 bis 34) eine jüngere Version der gleichen Getriebesteuerfunktion darstellt.

8. Getriebesteuervorrichtung nach einem der vorhergehenden Ansprüche, wobei eine dritte Getriebesteuerfunktion der mehreren Getriebesteuerfunktionen (31 bis 34) eine allgemeine und eine vierte Getriebesteuerfunktion der mehreren Getriebesteuerfunktionen (31 bis 34) eine individualisierte Getriebesteuerfunktion darstellt.

9. Getriebesteuervorrichtung nach einem der vorhergehenden Ansprüche, wobei zumindest einige der mehreren Getriebesteuerfunktionen (31 bis 34) und/oder deren Parameter (P01 bis P16) in Abhängigkeit eines Personalisierungssignals automatisch an eine Person anpassbar sind.

10. Getriebesteuervorrichtung nach einem der vorhergehenden Ansprüche, wobei zusätzliche Getriebesteuerfunktionen zu den mehreren Getriebesteuerfunktionen (31 bis 34) nach Inbetriebnahme der Getriebesteuervorrichtung in diese einspeisbar sind.

11. Verfahren zum Steuern eines Getriebes durch
- Eingeben von Schaltzuständen in eine Eingabevorrichtung (2) in einem Fahrzeug,
- Umsetzen von Eingabesignalen in Getriebesteuersignale und
- Umsetzen der Eingabesignale in Anzeigesignale für eine graphische Darstellung,
**gekennzeichnet durch**
- Aufrufen einer von mehreren parametrierbaren Getriebesteuerfunktionen (31 bis 34) mittels der Eingabeeinrichtung (2) unterstützt **durch** die graphische Darstellung.

12. Verfahren nach Anspruch 11, wobei das Eingeben ausschließlich mittels eines Dreh-Druck-Knopfs erfolgt.

13. Verfahren nach Anspruch 11, wobei das Eingeben mit Hilfe eines Touchscreen erfolgt.

14. Verfahren nach Anspruch 11 oder 13, wobei das Eingeben durch Erfassen von Augenbewegungen erfolgt.

15. Verfahren nach einem der Ansprüche 11 bis 14, wobei das Schaltverhalten eines Fahrers aufgrund seines manuellen Schaltens automatisch gelernt wird.

16. Verfahren nach einem der Ansprüche 11 bis 15, wobei die Getriebesteuersignale elektrisch an ein Getriebe übertragen werden.

17. Verfahren nach einem der Ansprüche 11 bis 16, wobei eine erste Getriebesteuerfunktion der mehreren Getriebesteuerfunktionen (31 bis 34) eine ältere Version und zweite Getriebesteuerfunktion der mehreren Getriebesteuerfunktionen (31 bis 34) eine jüngere Version dergleichen Getriebesteuerfunktion darstellt.

18. Verfahren nach einem der Ansprüche 11 bis 17, wobei eine dritte Getriebesteuerfunktion der mehreren Getriebesteuerfunktionen (31 bis 34) eine allgemeine und eine vierte Getriebesteuerfunktion der mehreren Getriebesteuerfunktionen (31 bis 34) eine individualisierte Getriebesteuerfunktion darstellt.

19. Verfahren nach einem der Ansprüche 11 bis 18, wobei zumindest einige der mehreren Getriebesteuerfunktionen (31 bis 34) und/oder deren Parameter (P01 bis P16) in Abhängigkeit eines Personalisierungssignals automatisch an eine Person angepasst werden.

20. Verfahren nach einem der Ansprüche 11 bis 19, wobei nach Inbetriebnahme der Getriebesteuervorrichtung mindestens eine zusätzliche Getriebesteuerfunktion zu den mehreren Getriebesteuerfunktionen (31 bis 34) in die Getriebesteuervorrichtung eingespeist wird.
